Europäisches Patentamt

European Patent Office

Office européen des brevets

(19)

(11) Publication number: **0 471 147 A1**

## (12) EUROPEAN PATENT APPLICATION

(21) Application number: **91106351.9**

(22) Date of filing: **19.04.91**

(51) Int. Cl.5: **A22C 13/00**

(30) Priority: **13.08.90 US 565832**

(43) Date of publication of application:
**19.02.92 Bulletin 92/08**

(84) Designated Contracting States:
**AT BE CH DE DK ES FR GB IT LI LU NL SE**

(71) Applicant: **VISKASE CORPORATION**
**6855 West 65th Street**
**Chicago, Illinois 60638(US)**

(72) Inventor: **Sybeldon, James Edward**
**2419 Wolfe Drive**
**Woodridge, Illinois 60517(US)**

(74) Representative: **Schwan, Gerhard, Dipl.-Ing.**
**Elfenstrasse 32**
**W-8000 München 83(DE)**

(54) Food casing article closed at one end and method for making the same.

(57) An end closure for a shirred casing stick is formed from a tail (14) of casing turned into the bore of the stick and compressed to a plug within the stick bore. There is an adhesive (30) on portions of the exterior surface of the tail so these portions tend to adhere together when the inverted tail is compressed which resists the unraveling of the plug during stuffing.

FIG. 4

Field of the Invention

The present invention relates to a shirred food casing article having a closure at one end and in particular to an end closure consisting of casing material drawn from the shirred food casing and to a method of making the end closure. More particularly, the invention relates to an axially compressed closure forming a plug of casing material implanted in an end of the hollow shirred food casing article.

Background

Shirred food casings of flexible cellulosic tubing are commonly used in the food industry for making and processing various food products such as frankfurters or the like. Consequently, the methods of making the shirred casing articles or "sticks", and the apparatus and methods relating to the use of the shirred casing to produce a frankfurter-type food product, are all well known in the art.

It is common to have a portion of the casing turned inward into the bore of the stick in order to plug the fore end of the bore. The end closure or "plug" formed by this inturned casing closes the casing so it can be stuffed out by the pressure of the food emulsion entering the casing.

An end closure for shirred sticks must meet certain design criteria, especially if the shirred stick is to be used for the production of frankfurters by automatic stuffing machines, as disclosed for example by U. S. Patent No. 3,115,558.

For example, the plug must be sufficiently coherent to contain the pressure of the stuffing operation until a first frankfurter link is formed. Otherwise the frankfurter food emulsion will spew from the end of the casing. Also the plug must not be too firmly anchored in the bore of the stick. If the plug is too firmly anchored, the force required to push the plug from the bore (hereafter referred to as the "deplug force") may cause the plug to blow out of the stick bore and tear the end of the casing which also allows the frankfurter emulsion to spew from the casing. Thus two important design considerations are that the plug must be easily expelled from the stick bore (low deplug force) and must contain the stuffing pressure.

It is not uncommon for an automatic stuffing machine to incompletely fill the leading end portion of a casing. This leaves the first few links malformed or understuffed. Rather than discard the frankfurter food emulsion contained in these links, the casing is opened and the emulsion recovered for reuse. In some continuous frankfurter producing methods, the end of one stuffed length of casing is tied to the end of another to provide a continuous progression of stuffed lengths through a smoke house or other processing facility. This also requires that the leading end of the casing be opened so emulsion can be removed from the portion of casing needed for tying.

This need for opening the casing to remove emulsion, either to recover frankfurter food emulsion from the first few malformed links or to clear the casing for tying, gives rise to a third design consideration. In this respect, an operator should be able to easily open the closure without resorting to cutting or tearing the casing. A common procedure for removing the emulsion is for an operator to manually squeeze the casing to strip the emulsion towards the closure in a so called "milking" action. This causes the closure to unravel, unwind or otherwise open to permit the operator to squeeze the food emulsion out of the end of the casing.

Another design consideration is that the length of casing turned into the bore of the stick for forming the end closure should be as short as possible. Using an excessive length of casing to form the closure means there is less casing left in the shirred stick for stuffing. For a stuffing operation using several hundreds of sticks per day, decreasing the length of casing needed to form an end closure even by a few inches results in substantial savings.

It should be noted that any closure which is simply twisted closed or axially compressed will begin to lose its integrity responsive to the pressure of the stuffing process. Accordingly, it is important that the closure not completely unravel and open prior to the time a first link is formed. Otherwise a "blown end" results which sprays food emulsion from the casing and over the stuffing machine. This causes a delay in production, because the machine must be shut down and the emulsion must be cleaned from the machine in order to prevent bacterial growth.

Thus, a properly formed closure will not completely unravel or otherwise open during the initial stages of the stuffing operation, but it will unravel and open responsive to the pressure of the "milking" action so that the food emulsion in the first few links can be expressed from the casing and recovered.

Yet another design consideration is that the end closure which is pushed forward by the stuffing pressure should not be too "hard". This is because at the start of the stuffing cycle, the closure is forced out of the bore of the casing stick and into a linker mechanism which has meshing components that form the stuffed casing into links. Often the closure does not properly enter the linker mechanism and if this happens, a "hard" closure is likely to damage the meshing components. However, if the closure is "soft", the meshing components are better able to accommodate and crush the material of the closure between them so there is less likelihood of damage to the equipment and to the casing.

Accordingly, a suitable end closure should have the features that:

(1) it does not require an excessive amount of casing and is easily formed;

(2) it provides a "soft" plug which, if it becomes entangled within the linker mechanism, is not likely to cause damage;

(3) it is not tightly anchored in the stick bore and is expelled at the onset of stuffing without damaging the shirred stick (low deplug force);

(4) it is able to contain the pressure of the food emulsion at the onset of stuffing; and

(5) it is easily unraveled during the stripping or "milking" operation at the end of stuffing.

Forming an end closure generally requires balancing these desired features in order to produce an operable end closure for a given size casing and stick bore size. For example, if the stick bore size is increased, a greater length of casing is needed to form an end closure able to sustain the stuffing pressure. However, as the length of casing in the end closure increases, the deplug force may increase and generally as low a deplug force as possible is most desirable.

In general, forming a closure at one end is most uniformly and economically accomplished during the manufacturing of the shirred casing stick. To this end, various types of casing closures and methods for forming such closures are known in the art. For example, Alsys, U. S. Patent No. 3,383,222, discloses a shirred casing having a compressed plug end closure implanted in the fore end of the stick. Here the plug is formed by first pulling a tail of the casing laterally across the bore of the stick, inturning the tail into the end of the casing stick, and then axially compressing the inturned tail against a fixed surface with a tamp rod inserted into the other end of the casing stick.

In the Alsys "222 Patent, the inturned portion of casing forms generally a cylindrical structure composed of plies of the inturned casing. When, as taught in this patent, the inturned casing is longitudinally compacted within the confines of the stick bore, the plies collapse one against another into accordion-type pleats which bear tightly against the inner peripheral surface of the shirred stick. These pleats extend across the longitudinal axis of the bore and form a tightly compacted plug which has a relatively symmetrical or uniform density about its axis, and which is firmly planted in the stick bore.

U.S. Patents 4,693,280 and 4,759,100 also disclose a closure formed by compacting an inturned portion of casing within the bore of a shirred stick.

However, the closure is formed, in part, with a vacuum assist. The result is that the deplug force of the closure made with a vacuum assist is lower than a closure containing the same length of casing made without vacuum assist. The closures described in each of these patents are acceptable but they require a relatively long length of casing to be effective.

U. S. Patent No. 3,882,252 discloses an end closure formed by gluing shut the end of the casing. In this respect, the '252 Patent discloses an end closure formed by depositing an adhesive within the open end of the casing and then pinching the open end to close it. The open end of the casing is thus at least partly sealed by the adhesive. Since only the extreme end of the casing is envoled in the closure, a minimum of casing is used. However, the adhesive closure as disclosed in the '252 Patent leaves no margin of error during fabrication. For example, if the stuffing pressure exceeds the ability of the adhesive to hold the end of the the casing shut, the casing will burst open at the onset of stuffing. If the adhesive is not softened by emulsion juices, it may not open and thus pervent stripping the emulsion from the first stuffed end of the casing. Also the closure made as disclosed in the '252 Patent requires that an adhesive be applied to the inside surface of the casing. This brings the adhesive into contact with the frankfurter emulsion so the adhesive must be approved by the U. S. Food and Drug Administration (FDA) as an indirect food additive.

German Utility Model 67 52 659 discloses closing the end of a casing by an adhesive tape applied around the outside surface of the casing. In this case, the adhesive does not come into contact with the frankfurter emulsion. However, the strength of the backing of the adhesive tape is a factor and may prevent stripping the casing without first cutting away or otherwise removing the tape.

Summary of the Invention

In the present invention, the end closure is formed from a length of casing turned into the stick bore and compacted to form a plug of casing positioned at one end of the stick bore. While the plug is able to provide some resistance to the stuffing pressure, the length of casing contained in the plug may be so short that it unravels at the onset of stuffing to the extent that, at best, it is only boarderline effective to contain the stuffing pressure and prevent a blown end.

The ability of the plug to contain the stuffing pressure is augmented by applying an adhesive to portions of the external surface of the casing contained in the plug. This adhesive does not seal the end of the casing and itself is not sufficient to effect a closure able to contain the stuffing pressure. However, the tack of the adhesive resists the unraveling of the plug at the onset of stuffing. This added resistance has been found sufficient to allow the plug to contain the stuffing pressure.

Moreover, the adhesive, being applied to an external casing surface, does not come into direct contact with the frankfurter emulsion. Instead, there always is at least one ply of the casing between the adhesive and the frankfurter emulsion.

In particular, the present invention is characterized by a food casing article comprising:

a) a hollow shirred stick of tubular food casing having a compacted plug of said tubular disposed in the bore of said shirred stick at one end, the plug being composed of a tail of said tubular casing drawn from said end and longitudinally compressed within said bore such that portions of said plug are formed against the surface of said bore;

b) said tail of tubular casing in said plug including an inverted and folded portion in which longitudinally adjacent sections of the exterior surface of said tubular casing are disposed in a face-to-face relationship; and

c) an adhesive between said face-to-face disposed exterior surface sections of said tubular casing, said adhesive adhering together at least a portion of said surface sections and thereby resisting the unfolding of said sections responsive to the pressure exerted against said plug by a food emulsion stuffed into said tubular food casing.

In its method aspect, the present invention is characterized by a method for providing a shirred food casing article with an end closure comprising the steps of:

a) drawing a tail of the tubular food casing from the stick laterally across the bore at said fore end;

b) inverting and folding the tail into the bore thereby bringing longitudinally adjacent sections of the external surface of the tail into a face-to-face relationship;

c) providing an adhesive between the inturned and face-to-face sections of the external surface of the tail; and

d) longitudinally compressing the inverted tail within the stick bore to provide a plug composed of a compacted mass of the tail, portions of which are adhered together by the adhesive.

The end closure of the present invention is a plug composed of a length of the tubular casing material which is turned into the bore of the casing stick and longitudinally compacted in situ. The casing turned into the stick bore is folded back onto itself so as to bring adjacent longitudinal sections of the casing external surface face-to-face. The space between these face-to-face surfaces contains an adhesive which serves to resist the separation of these surfaces. Consequently, the added resistance afforded by the adhesive allows a reduction of the overall length of casing needed in the longitudinally compacted plug to contain the stuffing pressure. This is because the folded sections of the closure must unfold and separate in order for the closure to open but the adhesive tends to hold the sections together and resist separation.

Based on the same compacted plug length, the plug of the invention is less dense or "softer" than a plug of the same length (only without the adhesive) containing a greater length of casing. Since the length of casing contained in the closure of the present invention is reduced, its deplug force is decreased and this decrease is accompanied without compromising the ability of the end closure to contain the stuffing pressure.

The plug configuration of the present invention is obtained by drawing a tail of casing across an opening of the stick bore and then turning the tail of casing into the bore of the casing stick in a conventional manner using a plunge rod to push the tail into the bore. Inverting the casing into the bore of the casing stick in this fashion causes portions of the external surface of the casing to fold into the bore of the stick such that adjacent longitudinal portions of the exterior surface are brought face-to-face. These face-to-face portions and the fold connecting them form a longitudinal pocket having a closed end (the fold) disposed within the bore of the stick and an end which opens in the direction of the bore opening. According to the present invention, an adhesive is placed in this pocket by any suitaille means. A preferred means is to spray the adhesive into the pocket through an axial passage in the plunge rod. Spraying the adhesive in this manner can be accomplished when the plunge rod has reached its maximum depth in the bore or as the plunge rod is withdrawn from the stick bore.

Applying an adhesive in this fashion exposes only a portion of the casing outer surface to the adhesive. As an alternative, the adhesive can be applied to the entire external surface of the tail of casing prior to its being inserted into the stick bore to maximize the surface area of the tail containing the adhesive.

Because there is at least one ply of the casing material between the adhesive and the frankfurter emulsion stuffed into the casing, any suitaille material having adhesive properties may be used. For example, any material classified as an adhesive by the FDA may be used provided the casing material is a barrier to the migration of the adhesive through the casing. If the casing does not provide such a barrier, then any material having adhesive properties may be used provided it has FDA approval as an indirect food additive.

Suitaille materials having the desired adhesives properties include, among others, gelatin, carboxymethylcellulose (CMC), hydroxypropylcellulose (HPC) and a polyamide-epichlorohydrin resin such as Kymene. Of these adhesive materials, a preferred material is HPC. This is because it was found that if an aqueous solution of HPC is used, an effective closure is made with less casing than required when using another adhesive of the group.

To distribute the adhesive around the longitudinally compacted plug, the plunge rod can be rotated around its longitudinal axis as it is inserted or withdrawn from the stick bore. This imparts a longitudinal twist to the tail so the adhesive between longitudinal folds of casing spirals around the plug.

## Description of the Drawings

Figures 1-5 illustrate, in schematic fashion, a sequence of steps for forming an end closure of the present invention;
Figure 6 is a view, on an enlarged scale, taken along lines 6-6 of Figure 4;
Figure 7 is a view showing the end closure after stuffing; and
Figure 8 is a graph showing the deplug force of end closures of the present invention.

## Description of the Preferred Embodiments

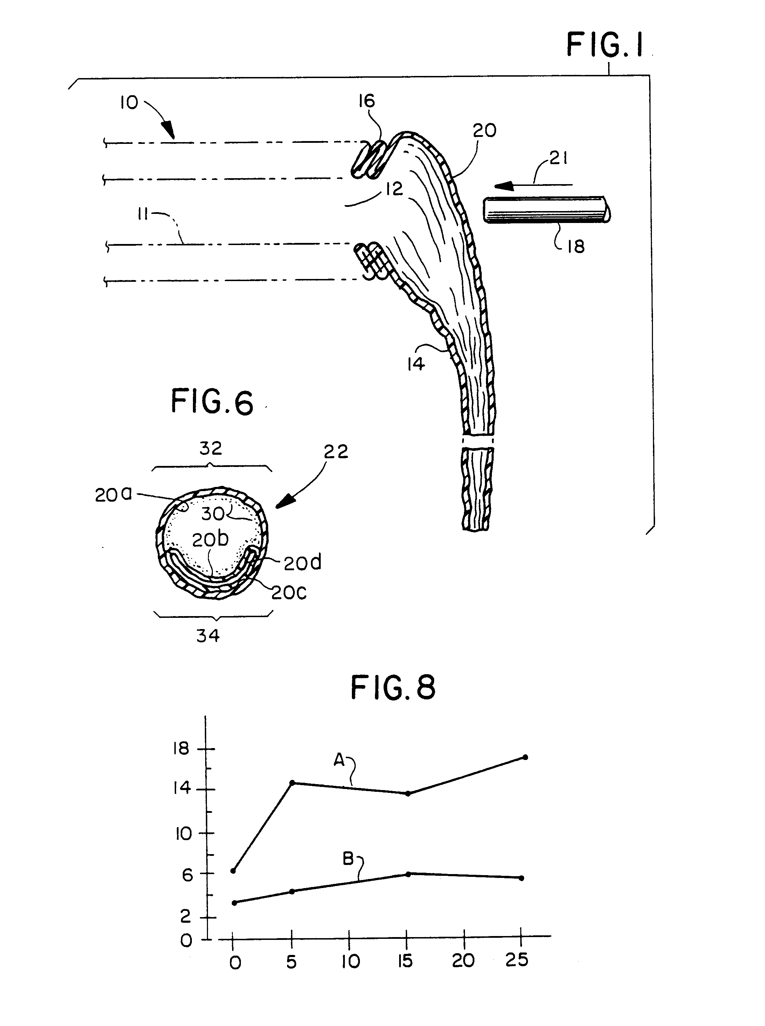

Referring to the drawings, Figure 1 shows a shirred stick generally indicated at 10. The stick is composed of a length of a shirred tubular food casing wherein the inner folds 11 of the shirred casing define the inner peripherial surface of an axial bore having an opening 12 at one end 16 of the stick. For purposes of the present invention, end 16 is the fore end of the stick and includes the casing which is stuffed first. Stick fore end 16 is the end to be closed by an end closure as described further hereinbelow. The other end of the stick (not shown) is an open aft end.

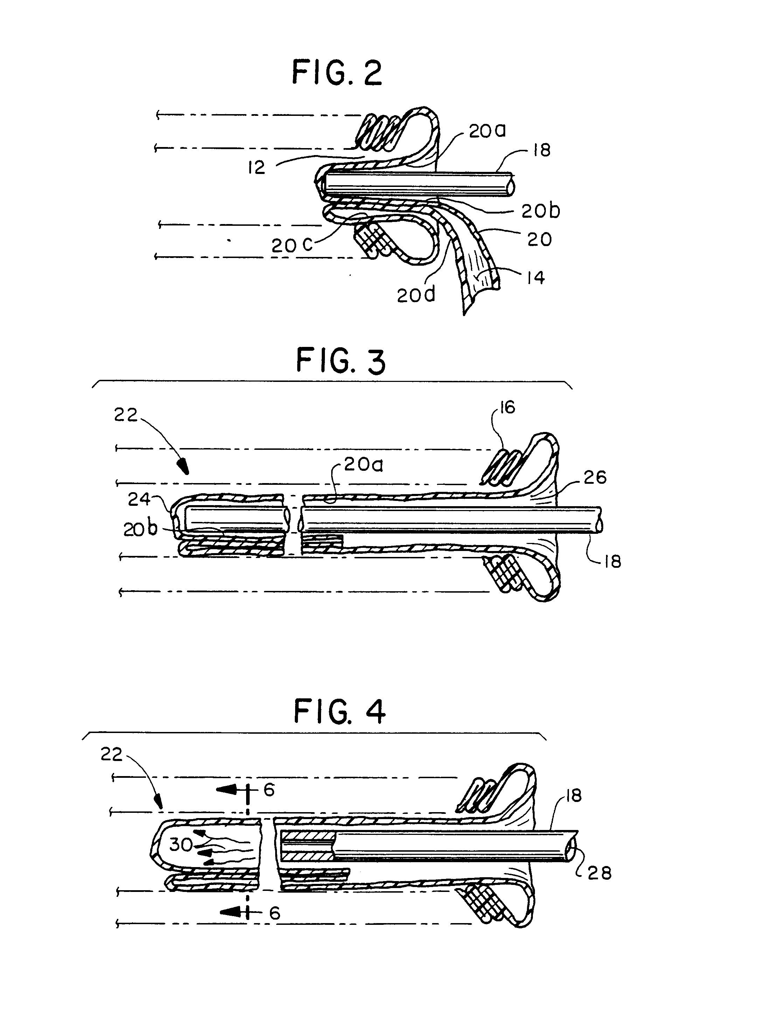

To form an end closure for stick fore end 16, a tail 14 of casing first is pulled laterally to obstruct or occlude the bore opening 12. Next a plunge rod 18 is advanced against the exterior surface 20 of the tail in the direction indicated by arrow 21. The plunge rod is axially aligned with the stick bore so that it will press against the tail and begin to move it into the stick bore through the opening 12 (Figure 2).

As the plunge rod 18 begins to press the tail into the stick bore, the tail folds longitudinally in on itself and inverts. This is best illustrated in Figure 2 which shows the plunge rod 18 pressing against the tail 14 so that two adjacent longitudinal sections 20a and 20b of the casing exterior surface are folded one towards the other and against the tamp rod. Also, the exterior surface sections 20c and 20d of the tail diametrically opposite sections 20a and b are likewise folded one towards the other.

The plunge rod 18 continues to press the tail into the stick bore until a desired depth of insertion is reached (Figure 3). At this point, the inverted tail forms generally a pocket 22 of the casing material within the bore of the casing stick and about rod 18. In particular, this pocket has a closed end 24 within the stick bore and an open end 26 towards the bore opening. The closed end 24 is a fold in the casing tail formed by inverting the casing and folding it to bring the longitudinally adjacent exterior surface sections of the casing tail into a position where the exterior surface sections 20a and 20b of the casing (and 20c, 20d) are face-to-face.

After tail 14 is inverted into the stick, the plunge rod 18 begins to withdraw from the stick bore (Figure 4) and the pocket 22. The rod 18 has an axial passage 28. During withdrawal, an adhesive material 30 is sprayed through the passage and into the pocket 22 of casing. The adhesive material sprayed in this fashion is applied to the inner surface of the pocket (which is the outer surface of the tubular casing).

Figure 6 shows the pocket 22 of casing in cross section. The pocket has one portion 32 of its wall formed of a single ply of casing. This single ply of casing contains the section 20a of the casing external surface only now inverted and forming an inner surface of the pocket. At a diametrically opposite side 34, the pocket has a wall portion containing three plies of casing, one of which contains the section 20b of the casing external surface now inverted and forming an inner surface of the pocket. The other two plies include sections 20c and 20b of the casing external surface. The adhesive 30 applied by spraying through plunge rod 18 is shown as droplets on the inner surface of the pocket. However, as noted above, the pocket inner surface is formed by sections of the casing exterior surface which were folded and brought into a face-to-face orientation by the tail-inverting process. Thus the adhesive droplets 34 in fact are on the casing external surface.

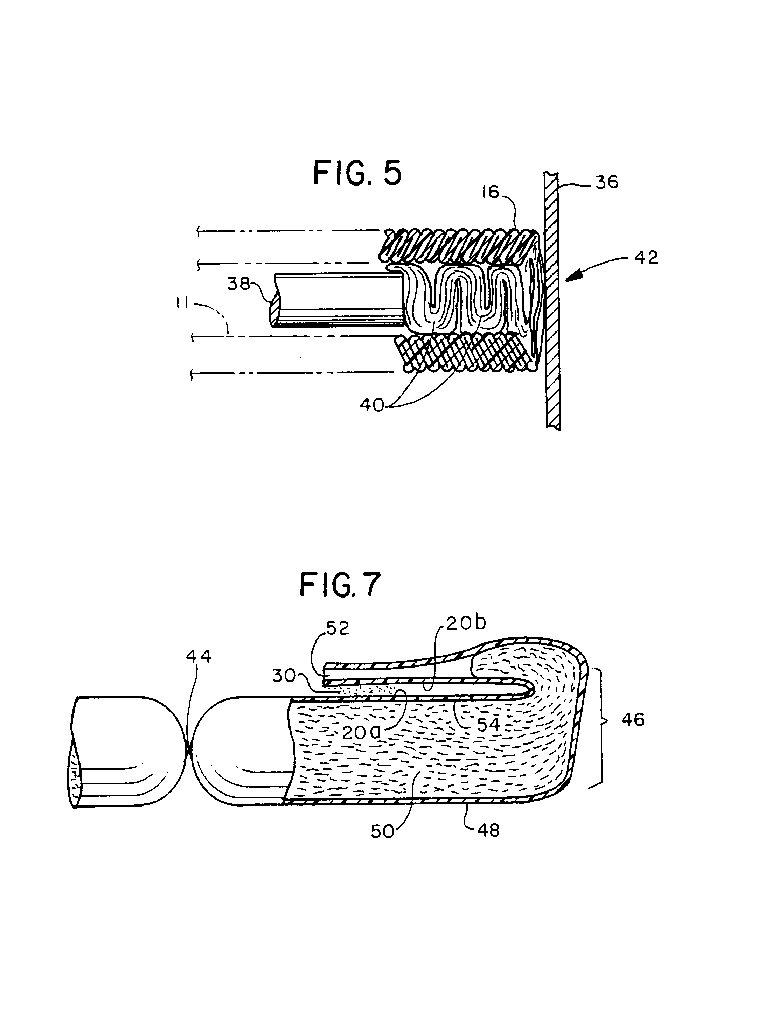

After the plunge rod is removed from the stick bore, a stop 36 is positioned against the fore end 16 of the shirred stick (Figure 5). A tamp rod 38 is inserted into the stick bore from the stick aft end to compress the pocket of casing against the stop. As the tamp rod moves against the pocket of casing, the pocket collapses longitudinally into pleats 40 and the plies of casing (forming the pocket of casing 22 of Figures 3, 4 and 6) are packed tightly one against another. The pleats 40 fold generally in an accordian-like fashion and press against the surface 11 of the stick bore. The result is that a compacted plug, generally indicated at 42 is formed within the shirred stick bore at the stick fore end 16. It should be readily apparent that since there is an adhesive coating on two face-to-face plies of the casing, the result of the longitudinal compaction between stop 36 and tamp rod 38 to form plug 42 is that the adhesive coated pleats adhere one to another.

During subsequent stuffing, the plug 42 is expelled from the stick bore and begins to unravel responsive to stuffing pressures. To completely unravel, the inverted casing in the plug must unfold. However, the sections 20a and 20b of the inverted casing which are adhered together by the adhesive 30 resist unfolding one from the other. The result is that the length of casing contained in the compacted plug and the adhesive bonding of casing sections together are sufficient to contain the stuffing pressures and avoid a so called "blown end".

Generally, it has been found that an end closure according to the present invention will retain sufficient integrity during stuffing to avoid blown ends. Thus, as show in Fig. 7, the plug "holds" until a first twist 44 is made in the stuffed casing by the linking apparatus. Figure 7 represents an extreme case in which the plug has unraveled completely but the adjacent longitudinal portions 20a and 20b of the casing exterior surface remain adhered one to another by the adhesive 30 between them. The result is that a portion of the casing (formerly tail 14) remains folded at 46 over the end of the stuffed casing to contain frankfurter emulsion within the first stuffed end 48 of the casing.

Reference to Figure 7 illustrates a further advantage of the invention. After stuffing, it is seen that the adhesive 30 is isolated from the frankfurter emulsion 50 by at least one ply 54 of the food casing. Preferably, the tack of a preferred adhesive is not so strong as to prevent separation of the casing surface 20a and 20b by the "milking" operation described hereinabove. However, if the adhesive does hold, emulsion still can be stripped from the casing because there is no blockage of the casing open end 52. The emulsion simply is forced around the folded section 42 and out through the casing open end 50. Thus, the adhesive 30 does not interfere with stripping the first stuffed end 48

It should be appreciated that in forming plug 42 as shown in Figure 5, the distance between stop 36 and plunger 38 determines the density of the plug and is a factor in controlling the magnitude of the deplug force. For example, the density of the plug is increased or decreased by increasing or decreasing respectively the total length of casing tail 14 turned into the stick bore. Since the plug is formed against the surface 11 of the bore, increasing the plug density tends to press it tighter to the stick bore and increases the deplug force. The present invention, which relies in part on an adhesive to resist the unraveling of the plug, was found to have a lower deplug force, a lower density and to require a shorter length of casing than a plug made in a similar fashion only without the adhesive.

Tests conducted as set out in the following example demonstrate that end closures of the present invention have a lower deplug force and require less casing to make than comparable inturned and longitudinally compacted end closures of the prior art.

As a control, a group of forty (40) casing sticks were shirred and compacted in a conventional manner using a conventional cellulosic casing having an inflated diameter of about 16 mm, otherwise known as Viskase Corporation size 17 NOJAX® casing. The resulting shirred sticks each had a bore diameter of about 10.41 mm. End closures as are presently in commercial use and containing a total casing length of about 27.94 cm were formed using a vacuum assist in accordance with the teachings of U.S. 4,759,100, the disclosure of which is incorporated herein by reference. In this respect, the method involved pulling about a 12.7 cm tail of casing across the stick bore. A hollow plunge rod when was inserted into the stick bore to a depth of about 15.24 cm. The casing was collapsed against the rod under a partial vacuum of between about 357 and 508 mm of mercury as the rod was withdrawn from the stick bore. Next, a stop was placed flush against the end of the stick. A tamp rod inserted into the stick bore from the opposite end collapsed the compacted and inverted casing to a plug length of about 19.05 mm. The end closure or plug as formed within the 10.41 mm stick bore was about 19.05 mm long and contained a total casing length of about 27.94 to 30.48 cm of casing.

The same casing was shirred in the same fashion to produce a second group of forty (40) sticks. End closures according to the present invention were formed in each of these additional forty sticks. This involved pulling a tail of casing about 7.62 cm across the stick bore and then inserting the plunge rod into the stick bore to a depth of about 11.43 cm. Thus, the total casing length inverted into the stick bore was about 19.05 cm long or about 68% the length of casing used in the controls. As the plunge rod was withdrawn from the stick bore, about 0.40 ml. of a 15% aqueous solution of KLUCEL® adhesive (Hercules brand of HPC) was sprayed into the inverted casing through the hollow plunge rod. The inverted casing was compacted in the same manner as the controls to a length of about 19.05 mm. Thus, the end closures formed according to the present invention contained only about 19.05 cm in the 19.05 mm plug.

The sticks of each group were divided into four (4) sets of ten (10) sticks each. The deplug force of each set of sticks was tested fresh (on the day of manufacture) and thereafter at 5, 14 and 25 day intervals.

The test for deplug force involves pressing a spring loaded rod through the bore of the stick and against the end of the plug positioned in the stick bore. When sufficient force is applied to pop the plug free of the bore, the spring force, in pounds, is recorded and is the "deplug force" of the stick.

The results of the test is shown in the graph of Fig. 8. Figure 8 shows that the average initial deplug force of the control group (Graph A) was about six pounds. This rose to about 14 pounds after 5 days and then increased slightly to about 16 pounds after 25 days of aging.

In contrast, the average initial deplug force of end closures made according to the present invention (Graph B) was only about three pounds. This increased to about four pounds after 5 days and remained in the 4-5 pound range over the remainder of the 25 day aging period.

A second group of controls were made as noted above only with end closures containing less than about 21.2 cm of casing. As expected, the deplug force of these end closures was lower than the first group of controls. However, it was found that if the length of casing was decreased to about 20.4 cm, the number of blown ends due to premature unraveling of the end closure was four sticks out of twenty tested. This is an unacceptaille level for commercial purposes. A minimum length for commercial purposes was determined by stuffing tests to be about 20.95 cm and more preferably about 24.13 cm.

In contrast, similar shirred sticks having an end closure according to the present invention and stuffed using the same stuffing apparatus and procedures, stuffed satisfactorily and the instance of blown ends was reduced to acceptaille levels. In particular, shirred sticks comparable to the controls but each having an end closure containing only about 19.05 cm of casing with the plies of casing adhered according to the present invention were able to contain the stuffing pressure and permit formation of a first link. This represents a casing saving of over 5 cm per stick.

Having thus described the invention in detail, what is claimed as new is:

**Claims**

1. A food casing article comprising:
   a) a hollow shirred stick of tubular food casing having a compacted plug of said tubular disposed in the bore of said shirred stick at one end, the plug being composed of a tail of said tubular casing drawn from said end and longitudinally compressed within said bore such that portions of said plug are formed against the surface of said bore;
   b) said tail of tubular casing in said plug including an inverted and folded portion in which longitudinally adjacent sections of the exterior surface of said tubular casing are disposed in a face-to-face relationship; and
   c) an adhesive between said face-to-face disposed exterior surface sections of said tubular casing, said adhesive adhering together at least a portion of said surface sections and thereby resisting the unfolding of said sections responsive to the pressure exerted against said plug by a food emulsion stuffed into said tubular food casing.

2. A food casing article as in claim 1 wherein said adhesive is selected from the group consisting of gelatin, carboxymethylcellulose, hydroxypropylcellulose and a polyamide-epichlorolydrin resin.

3. A food casing article as in claim 1 wherein said adhesive is hydroxypropylcellulose.

4. A food casing article as in claim 1 wherein said casing is a barrier to the passage of said adhesive material and there is at least one ply of said casing between said adhesive material and a food product stuffed into said casing.

5. A food casing article as in claim 1 wherein said adhesive is disposed around substantially the entire external surface of said tail for at least part of the length of said tail.

6. A food casing as in claim 1 wherein said plug is composed of at least a portion of its length of four plies of said tubular casing and said adhesive is disposed between only two of said plies.

7. A food casing article as in claim 1 wherein the length of casing contained in said compacted plug is insufficient to provide containment of the pressure exerted by a food emulsion stuffed into said tubular casing absent said adhesive.

8. A food casing article comprising:

a) a hollow shirred stick of tubular food casing having a compacted plug of said tubular casing disposed in the bore of said shirred stick at one end, said compacted plug being composed of a length of said tubular casing drawn from said end and longitudinally compressed within said bore such that portions of said plug are formed against the surface of said bore.

b) said length of tubular casing in said plug including an inverted and folded portion forming a pocket wherein the inner surfaces of said pocket comprise longitudinally adjacent sections of the exterior surface of said tubular casing;

c) said length of tubular casing contained in said compacted plug being insufficient to provide containment of the stuffing pressure exerted against said plug by a food emulsion stuffed into said tubular casing and against said plug; and

d) an adhesive disposed in said pocket and adhering together portions of said longitudinally adjacent sections of said tubular casing exterior surface and providing a resistance to the unfolding of said sections responsive to said stuffing pressure such that said length of tubular casing contained in said compacted plug and said adhesive together constitute means providing for the containment of said stuffing pressure.

9. A method for providing a hollow shirred stick of tubular food casing with a closure disposed within the bore of the stick at a fore end thereof comprising the steps of:

a) drawing a tail of the tubular food casing from the stick laterally across the bore at said fore end;

b) inverting and folding the tail into the bore thereby bringing longitudinally adjacent sections of the external surface of the tail into a face-to-face relationship;

c) providing an adhesive between the inturned and face-to-face sections of the external surface of the tail; and

d) longitudinally compressing the inverted tail within the stick bore to provide a plug composed of a compacted mass of the tail, portions of which are adhered together by the adhesive.

10. A method as in claim 9 wherein said providing step (c) is accomplished by applying the adhesive to the longitudinally adjacent exterior surface of the tail prior to said inverting and folding step (b).

11. A method as in claim 9 wherein said adhesive providing step (c) is accomplished by introducing the adhesive directly between the inturned and face-to-face sections immediately after said inverting and folding step (b).

12. A method as in claim 11 wherein said inverting and folding step (b) provides a pocket of casing within the stick bore, the pocket having diametrically opposite wall surfaces formed by the face-to-face sections of the tail external surface, a closed end within the bore formed by a fold between the face-to-face sections of the tail external surface, and an open end towards the stick fore end; and said adhesive providing step (c) is accomplished by spraying the adhesive into the pocket of casing through its open end.

13. A method as in claim 9 including:

a) axially aligning a plunge member with the stick bore;

b) moving the plunge member against the tail external surface and into the stick bore thereby inverting and folding the tail into the stick bore to bring longitudinally adjacent sections of the tail external surface face-to-face; and

c) introducing the adhesive through the plunge member and between the face-to-face sections.

14. A method as in claim 13 including withdrawing the plunge member from the stick bore and introducing the adhesive between the face-to-face sections during the course of said withdrawing.

# FIG.1

# FIG.6

# FIG.8

# FIG. 2

# FIG. 3

# FIG. 4

EP 0 471 147 A1

## FIG. 5

16
36
42
38
11
40

## FIG. 7

52
20b
44
30
20a
54
46
50
48

11

European
Patent Office

Application Number

# EUROPEAN SEARCH
# REPORT

## EP 91 10 6351

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 339 457   (WINKLER) | 1,2,8,9, 11-14 | A 22 C 13/00 |
| | – – – | | |
| A | DE-A-3 339 457   (* the whole document *) | 3-5,7 | |
| | – – – | | |
| A | EP-A-0 239 029   (VISKASE CORPORATION) * the whole document * * | 1,8,9 | |
| | – – – | | |
| D | EP-A-0 239 029   (& US-A-4 693 280) | | |
| | – – – | | |
| D | EP-A-0 239 029   (& US-A-4 759 100) | | |
| | – – – | | |
| A | EP-A-0 087 241   (DEVRO) | | |
| | – – – | | |
| A | US-A-3 892 869   (SHERIDAN) | | |
| | – – – | | |
| A | GB-A-2 070 909   (DEVRO) | | |
| | – – – – – | | |
| | | | **TECHNICAL FIELDS SEARCHED (Int. Cl.5)** |
| | | | A 22 C |

The present search report has been drawn up for all claims

| Place of search | Date of completion of search | Examiner |
|---|---|---|
| The Hague | 11 November 91 | DE LAMEILLIEURE D. |